(19) **Europäisches Patentamt / European Patent Office / Office européen des brevets**

(11) **EP 2 171 403 B1**

(12) **FASCICULE DE BREVET EUROPEEN**

(45) Date de publication et mention
de la délivrance du brevet:
**22.03.2017 Bulletin 2017/12**

(51) Int Cl.:
*G01D 5/245* ^(2006.01)        *B62D 15/02* ^(2006.01)
*G01D 5/14* ^(2006.01)          *B62D 1/00* ^(2006.01)
*B62D 21/00* ^(2006.01)        *B62D 47/00* ^(2006.01)

(21) Numéro de dépôt: **08838034.0**

(22) Date de dépôt: **23.07.2008**

(86) Numéro de dépôt international:
**PCT/FR2008/001093**

(87) Numéro de publication internationale:
**WO 2009/047401 (16.04.2009 Gazette 2009/16)**

(54) **CAPTEUR MAGNÉTIQUE SANS CONTACT DE POSITION ABSOLUE MULTITOUR À ARBRE TRAVERSANT**

KONTAKTFREIER UND IN MEHRERE RICHTUNGEN DREHBARER ABSOLUTPOSITIONSMAGNETSENSOR MIT EINEM DURCHFÜHRUNGSSCHAFT

NON-CONTACT MULTI-TURN ABSOLUTE POSITION MAGNETIC SENSOR COMPRISING A THROUGH-SHAFT

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **24.07.2007 FR 0705373**

(43) Date de publication de la demande:
**07.04.2010 Bulletin 2010/14**

(73) Titulaire: **Moving Magnet Technologies (MMT)**
**25000 Besançon (FR)**

(72) Inventeurs:
• **RONNAT, Yannick**
  **F-25320 Vorges-les-Pins (FR)**

• **MASSON, Gérald**
  **F-25000 Besançon (FR)**

(74) Mandataire: **IP Trust**
**2, rue de Clichy**
**75009 Paris (FR)**

(56) Documents cités:
EP-A- 1 342 647        EP-A- 1 437 575
EP-A- 1 536 217        EP-A- 1 830 155
WO-A-2007/057563    DE-A1-102004 053 690
JP-A- 2006 105 827

Printed by Jouve, 75001 PARIS (FR)

## Description

La présente invention concerne le domaine des capteurs de position rotatifs magnétiques pour des angles supérieurs à 360° et pouvant aller jusqu'à plusieurs tours, et plus particulièrement les capteurs de position destinés à la mesure de la position angulaire d'une colonne de direction pour automobile, sans que cette application ne soit exclusive.

La position angulaire de la colonne de la direction et du volant est une information nécessaire pour des fonctions telles que le contrôle électronique de la stabilité du véhicule (ESP : Electronic Stability Program) et la direction assistée électrique (EPS : Electric Power Steering). L'information de l'angle de direction, et donc des roues, peut également être utilisée pour des fonctions complémentaires telles que les phares directionnels, le contrôle de trajectoire, le parcage automatique etc.

Un capteur monotour ne peut à lui seul détecter la position de la colonne de la majorité des automobiles dont le volant doit pouvoir tourner d'au moins deux tours. Une solution pourrait être d'associer un capteur 360° à un « top tour » pour savoir dans quel tour le volant se trouve (par exemple WO07014599). Mais ces systèmes font l'hypothèse d'une position initiale lors de la mise sous tension. Toutes les positions qui s'ensuivent sont relatives à cette position de départ. Le problème est donc que cette position initiale est redéfinie à chaque fois qu'on remet le contact de l'automobile. Cela veut dire que si ce système n'a pas de mémoire de la dernière position de l'angle volant ou si l'angle est changé quand le contact est coupé, l'angle indiqué à la mise sous contact sera erroné.

De plus, les spécifications pour une application colonne sont très sévères. En effet cette application nécessite un capteur absolu pouvant aller jusqu'à +/- 720° voire +/-1440° pour une précision inférieure à +/-2° et une résolution inférieure a 0.1°.

Pour ce faire, différentes solutions multitour absolues existent pour la mesure d'angle et mettent en oeuvre des technologies diverses : potentiométriques, optiques, inductives ou encore magnétiques...

Les solutions optiques telles que décrites par exemple dans les brevets EP1 219 527 ou US 6848 187 sont complexes, coûteuses et peuvent s'avérer incompatibles avec un montage dans le compartiment moteur du fait de leur incompatibilité avec les conditions de température et de d'environnement.

Les solutions inductives sont très coûteuses en termes de développement et de mise au point sur une colonne de direction (US 6 384 598).

Les solutions potentiométriques ont de grands avantages dont principalement leur coût et leur simplicité.

On connaît par exemple dans l'état de la technique le brevet US 5,200,747 qui présente un capteur multitour absolu, composé de deux capteurs 360° potentiométriques. Le premier potentiomètre est utilisé pour mesurer l'angle de rotation de l'organe rotatif de 0 à 360° et le second potentiomètre est utilisé pour déterminer le nombre de rotations complètes de l'organe rotatif. Le rotor du second potentiomètre est entraîné par un système roue à une dent + pignon où la roue à une dent est liée au premier potentiomètre. Chaque fois que le premier potentiomètre fait un tour complet, l'unique dent de la roue engraine avec le pignon (dit roue de « Genève ») qui fait tourner le rotor du second potentiomètre d'un angle prédéterminé. Le déplacement du second potentiomètre est donc incrémental et sa position s'incrémente a chaque tour du premier potentiomètre. En déterminant la sortie des deux potentiomètres, l'angle absolu de l'organe rotatif peut être déterminé.

On peut noter deux inconvénients majeurs à cette solution. La première étant que la solution proposée se fait avec frottement entre le contact et les pistes du potentiomètre, ce qui réduit la durée de vie du capteur. De plus, les pistes peuvent se détériorer au contact de la poussière, de l'huile ou d'autres liquides. Le deuxième inconvénient majeur est le caractère incrémental du second potentiomètre. En cas de défaut du premier potentiomètre le second ne permet pas de détecter même de manière grossière la position dans le tour de l'organe rotatif ni de détecter le disfonctionnement du premier potentiomètre.

On connaît également dans d'état de la technique des solutions sans contact magnétiques qui calculent la position absolue d'un organe rotatif à partir du déphasage continu de deux capteurs rotatifs, tels que décrits par exemple dans les brevets et applications US2005000288286, JP2006119082, US 6,941,241, US 5,930,905, US 6,466,889. Le principe de ces capteurs est identique : ils sont composés d'une roue dentée liée à la colonne qui entraîne 2 pignons au nombre de dents légèrement différent, solidaires chacun d'un aimant. La rotation de chaque aimant est détectée par une sonde magnétosensible puis les signaux déphasés traités par un algorithme. La précision de l'angle absolu mesuré dépend donc de la différence de deux signaux issus de deux capteurs différents et également de l'algorithme de calcul. La soustraction de deux signaux pour obtenir une seule mesure est un gros inconvénient. Cela diminue la précision par deux par rapport à la précision d'un des deux capteurs pris seuls. La moindre erreur d'un des deux capteurs, le moindre déphasage mécanique, le moindre jeu dans un des pignons provoque une erreur de mesure de l'angle. De plus cela nécessite un algorithme très élaboré pour calculer l'angle absolu de l'organe rotatif.

La période de chaque signal est très petite comparée à la période de l'organe rotatif (360°). Cela signifie que le signal pris seul d'un des deux capteurs ne permet en aucun de donner une information même grossière de la position de l'organe rotatif. Ceci est un problème en cas de défaillance d'un capteur qui ne peut être diagnostiquée en utilisant le signal de l'autre capteur.

On connaît dans l'état de la technique, la demande WO 2005/076860 décrivant un capteur couple et position multitour absolu, où la mesure de la position de l'organe rotatif suit le principe du brevet US 5,200,747 c'est-à-dire que la mesure de position est réalisée par le biais de deux capteurs : un capteur 360° directement lié à l'organe rotatif et un deuxième capteur incrémental entraîné par une roue de Genève. À la différence du brevet US 5,200,747, les capteurs utilisés ne sont pas potentiometriques mais de type magnétique sans contact. Chacun des deux capteurs présente un aimant bague et deux éléments magnétosensibles espacés de 90°, qui mesurent la composante radiale du champ généré par l'aimant et qui conduit à deux signaux sinusoïdaux en quadrature qui servent après décodage à détecter la position sur 360 degrés.

Ce brevet résout le problème du contact du brevet US 5,200,747, mais l'inconvénient lié au principe incrémental développé précédemment n'est pas résolu. De plus un autre inconvénient de cette solution est la présence de deux sondes, ce qui peut induire une erreur de mesure due au mauvais placement d'une sonde par rapport à l'autre. Egalement, la présence de deux circuits intégrés décalés spatialement de 90° augmente le coût final du capteur car la surface de circuit imprimé peut être importante et le nombre de connexion est augmenté.

Les mêmes inconvénients liés à l'utilisation d'incréments se retrouvent dans le brevet EP0699151 ou le signal grossier n'est codé que sur 3 bits ce qui limite la précision du capteur de tour, qui plus est, réalisé par pas moins de 3 sondes de Hall.

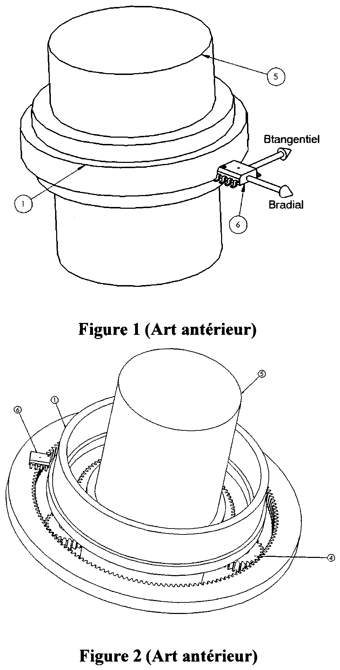

On connaît par ailleurs dans l'état de la technique la demande de brevet WO07057563 qui décrit un capteur de position rotatif sur 360° et qui utilise une sonde magnéto-sensible afin de déterminer la position angulaire d'un aimant bague ou disque aimanté sensiblement diamétralement. Dans ce brevet, la sonde sensible à la direction du champ magnétique généré par l'aimant est placée à l'extérieur de l'aimant permettant ainsi d'obtenir un capteur rotatif à arbre traversant destiné par exemple à mesurer l'angle de rotation d'une colonne de direction. De plus, il est décrit dans cette demande l'utilisation du capteur associé à une réduction du mouvement afin de ramener la rotation sur plusieurs tours à une rotation inférieure ou égale à un tour au niveau du capteur (voir figure 2). L'inconvénient majeur de cette solution est le fait d'utiliser une réduction de rapport n, ce qui diminue la résolution et la précision d'autant, ce qui peut être insuffisant pour une application telle que la colonne de direction où la précision et la résolution sont très élevées.

Le document EP1437575 décrit un capteur de position selon l'état de la technique.

La présente invention se propose de résoudre les problèmes mentionnés ci-dessus en utilisant deux capteurs 360° sans contact pour réaliser un capteur multitour absolu. Le premier capteur sans contact est utilisé pour mesurer l'angle de rotation de l'organe rotatif de 0 à 360° et le second capteur est utilisé pour déterminer le nombre de rotations complètes de l'organe rotatif. Un système mécanique de réduction continue de rapport n est intégré entre les deux capteurs. L'arbre d'entrée du réducteur est lié au premier capteur et le rotor du second capteur est lié à l'arbre de sortie du réducteur. Chaque fois que le premier capteur fait un tour complet, le deuxième capteur fait seulement 1:n tour. Le deuxième capteur permet d'obtenir une mesure de l'angle absolu total avec une précision et une résolution limitée mais le premier capteur résout ce problème en permettant d'affiner la mesure du deuxième capteur et ainsi obtenir une précision et une résolution très fines sur 360°. De plus, en cas de défaut du premier capteur le second permet quand même de détecter (résolution réduite n fois) la position dans le tour de l'organe rotatif et de détecter le disfonctionnement du premier capteur.

La solution ci-après décrite permet ainsi de d'augmenter la fiabilité des mesures tout en l'adaptant avantageusement à différentes configurations géométriques (capteur 2 tours, 3 tours etc., avec la même précision et résolution quel que soit le nombre de tour), notamment dans le cas d'un dispositif à axe traversant.

L'invention peut, suivant une configuration préférentielle, utiliser 2 capteurs du type de celui décrit dans l'application WO 2007/057563.

Un premier capteur, dit principal, mesure l'angle du volant sur une course de 360° et délivre un signal proportionnel à cet angle sur cette course. Pour un angle supérieur, le signal délivré est identique à celui délivré pour un angle identique modulo 360°. Ce signal seul permet de connaître la position relative du volant par rapport à la position initiale, mais pas sa position absolue. En effet, le premier capteur délivre un signal périodique de période 360°. La mesure de l'angle est précise dans cette période mais ne permet pas de savoir dans quel période l'arbre se situe.

Le deuxième capteur a pour fonction d'une part d'indiquer à chaque instant dans quelle période le premier capteur se trouve, d'autre part d'apporter une certaine redondance car le signal est certes moins précis, mais il l'est suffisamment pour pouvoir le comparer à un intervalle de valeur en corrélation avec le signal du premier capteur. En effet, si le signal délivré est hors de l'intervalle attendu, on peut en déduire un disfonctionnement du système.

Il existe plusieurs possibilités de générer le signal du deuxième capteur.

La demande de brevet WO 2005/076860 décrit une manière de générer un second signal qui est incrémentale (roue de Genève) ce qui fait que le signal indique bien dans quel tour se trouve le premier capteur, mais le fait que le signal soit de type discret (utilisation de valeurs par paliers) ne permet pas de l'utiliser pour la redondance.

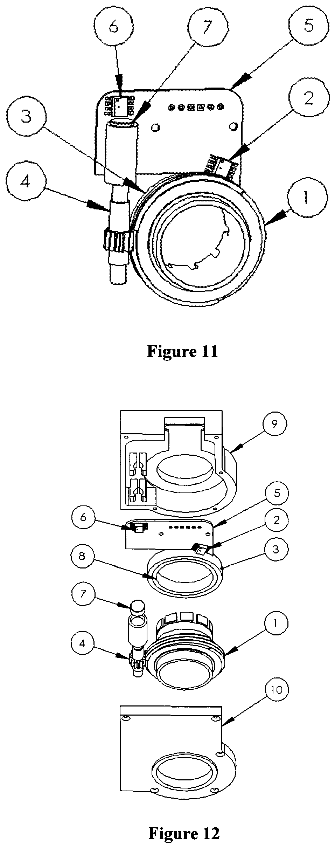

L'invention consiste à utiliser un moyen mécanique de réduction continu de vitesse entre l'arbre principal (repère 1 dans la figure 11) et le second capteur de telle sorte que la position mécanique angulaire du second capteur soit sensiblement proportionnelle à la position angulaire à mesurer de l'arbre principal.

Le signal du premier capteur est proportionnel à l'angle de l'arbre d'entrée, sur 360°, et il est périodique de période 360°. Il fournit une indication fine de la position sur un tour.

Le signal du second capteur est sensiblement proportionnel à l'angle de l'arbre d'entrée sur la course complète, tout en étant moins précis que le signal du capteur 1. Il fournit une indication grossière de la position sur la course complète.

Avantageusement, la combinaison électronique des 2 signaux permet de synthétiser un signal proportionnel à la position de l'arbre d'entrée sur la course complète, du même type que le signal 2, mais avec la précision du signal 1. Le gain est donc significatif en terme de précision et de résolution.

L'homme de métier connaît plusieurs moyens de réaliser une réduction de vitesse d'un arbre à l'autre. Les plus avantageuses du point de vue encombrement, pour des rapports de réduction de l'ordre de 3 à 5, sont les suivantes :

    * réduction à roue et vis sans fin,

    * réduction par train d'engrenages,

    * réduction directe par engrenage : cette solution est possible bien que non avantageuse du point de vue encombrement,

    * réduction par couplage magnétique.

Les deux signaux tels que représentés figure 1 pourront par exemple être exportés vers un microcontrôleur qui à l'aide des signaux 1 et 2 génèrera un signal monotone croissant dont la précision et la résolution sont significativement améliorées par rapport au signal 2.

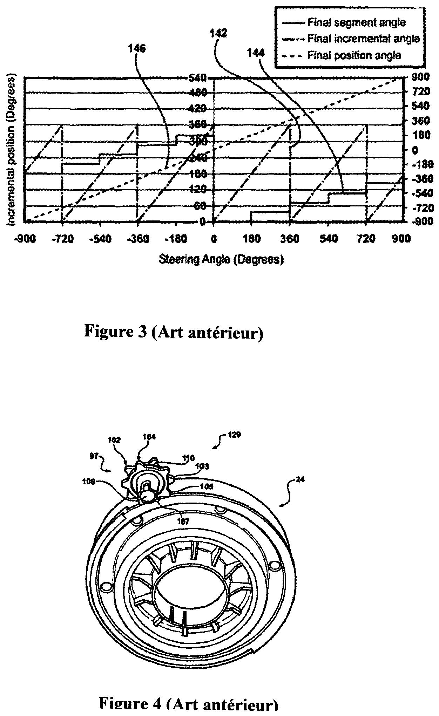

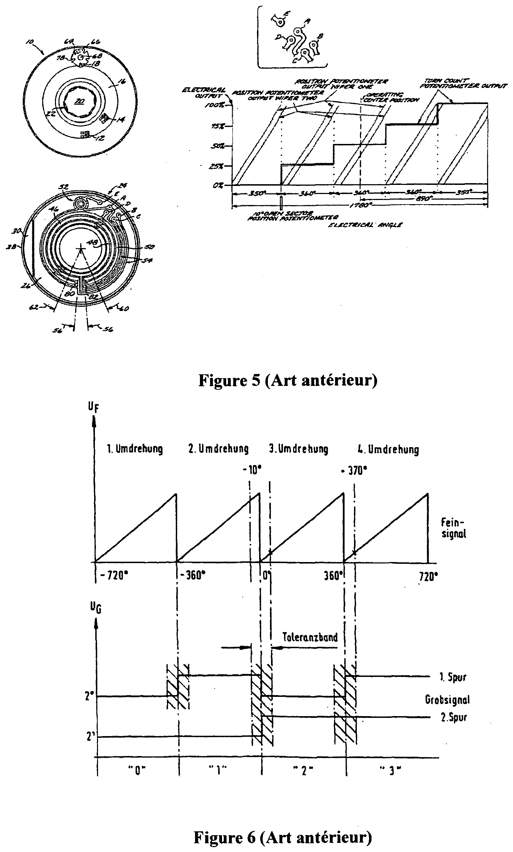

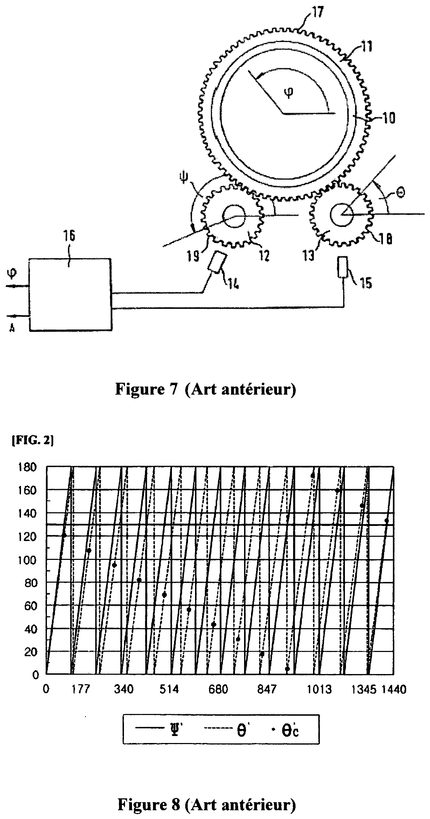

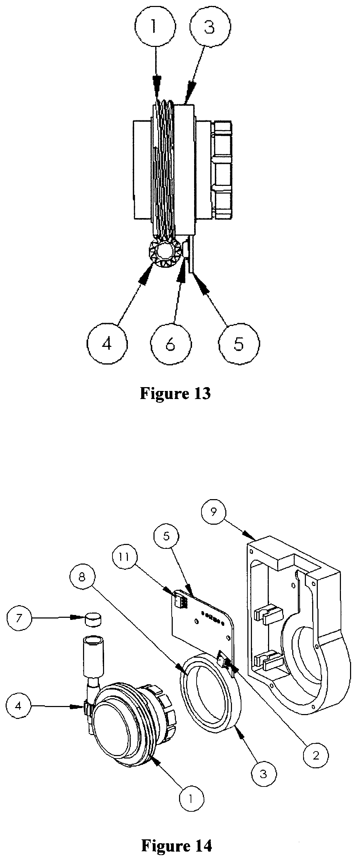

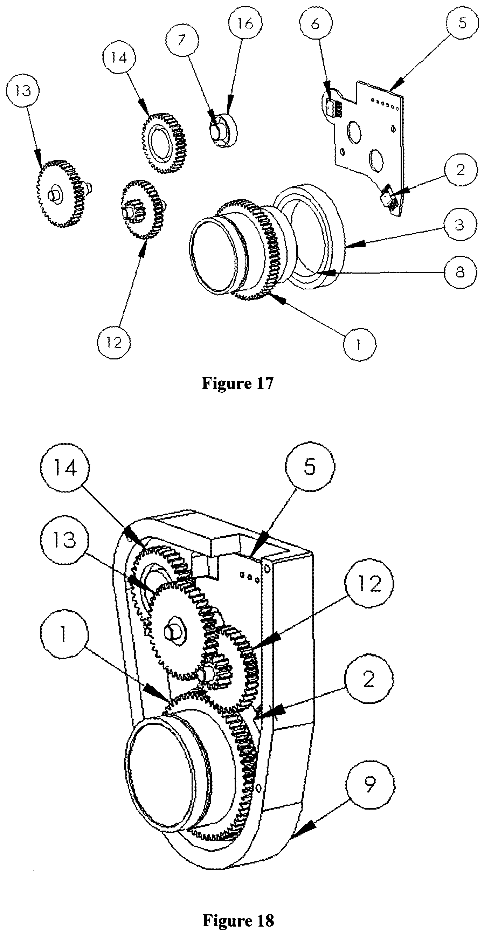

L'invention sera mieux comprise à la vue des figures 1 à 20 qui illustrent des exemples de réalisation préférentiels mais non exclusifs de ce type de capteur angulaire absolu multitour de haute précision, avec redondance incorporée.

La présente invention concerne également le domaine des capteurs couple et position rotatifs magnétiques pour des angles égaux ou supérieurs à 360° et pouvant aller jusqu'à plusieurs tours, et plus particulièrement les capteurs de couple et de position destinés à la mesure de la torsion d'une colonne de direction et la position angulaire d'une colonne de direction pour automobile, sans que cette application ne soit exclusive.

Le couple exercé par le conducteur sur la colonne de direction est une information nécessaire pour déterminer le niveau d'assistance de direction électrique. Ce qui permet au conducteur de tourner plus facilement le volant. L'information du couple et de la position de la colonne de direction sont ainsi mises en commun pour optimiser l'assistance et la stabilité du véhicule. La présente invention propose une solution qui associe judicieusement un capteur de position supérieur ou égal à 360° et un capteur de couple magnétique comme par exemple celui décrit dans le brevet FR2872896. Ainsi, la présente solution offre un montage aisé et une intégration très compacte, avec une sensibilité optimisée et des pièces de tailles et de poids minimaux. Nous pouvons trouver dans l'état de l'art des solutions couple et position mais qui sont simplement un capteur de couple classique et un capteur de position mis l'un à coté de l'autre. Par exemple le brevet US2006 0236784 présente une solution capteur de couple et capteur de position multitour, mais il s'agit simplement de la mise bout à bout d'un capteur de couple magnétique et d'un capteur de position multitour magnétique. Ce qui donne lieu à un encombrement important, à l'obligation d'utiliser plusieurs PCB ou un PCB souple car les éléments de Hall se trouvent dans des plans différents et à une interaction magnétique entre les capteurs de couple et de position.

C'est pourquoi la présente invention se propose de remédier à ces inconvénients. Pour cela, le nouveau capteur intégré regroupant un capteur de couple et de position se compose de quatre structures magnétiques distinctes :

- une première structure magnétique rotorique comprenant une pluralité d'aimants fixés sur une culasse et aimantés radialement, qui appartient au capteur de couple,
- une seconde structure magnétique statorique comprenant deux couronnes concentriques présentant une pluralité de dents qui appartient au capteur de couple,
- une troisième structure collectrice fixe constituée de deux portions d'anneaux concentriques prolongées de branches se refermant pour former un entrefer de mesure où est placé un élément magnéto-sensible qui appartient au capteur de couple,
- une quatrième structure composée d'un aimant aimanté diamétralement (ou d'Halbach) placé entre les couronnes de la partie statorique et qui peut donc être surmoulé sur la pièce plastique qui supporte la seconde structure magnétique du capteur de couple. Un élément magnéto sensible de type MLX 90316 ou autre est placé à l'extérieur de l'aimant du capteur de position et fait partie du même PCB que l'élément magnéto sensible du capteur de couple.

Cette construction permet ainsi d'obtenir un capteur de couple et de position dont l'encombrement axial est identique à l'encombrement d'un capteur de couple seul. Dans cette configuration, l'aimant du capteur de couple et l'aimant du capteur de position sont concentriques et tous les éléments de hall sont situés dans le plan médian des aimants qui est perpendiculaire à l'axe de rotation des capteurs. Ceci a pour avantage de pouvoir insérer tous les éléments de hall sur un unique PCB et d'annuler l'interaction magnétique d'un capteur sur l'autre.

De plus le coût d'un tel capteur intégré est réduit par la mise en commun des pièces qui le composent : L'aimant du capteur de position et les couronnes concentriques du capteur de couple peuvent être surmoulés en même temps et ne forment donc qu'une seule pièce, et de même pour les sondes de Hall du capteur de couple et de position qui font partie du même et unique PCB.

À cette construction, nous pouvons rajouter une réduction et un capteur de position absolue telle que la première partie de ce brevet les décrit.

De manière avantageuse, les deux systèmes de détection sont positionnés à proximité l'un de l'autre de sorte à pouvoir être intégré dans un seul boîtier. Le dispositif ainsi réalisé est compact et peut donc être aisément positionné sur un dispositif à mesurer.

L'invention sera mieux comprise à la vue des figures 21 à 25 qui illustrent des exemples de réalisation préférentiels, mais non exclusifs, de ce type de capteur de couple et position angulaire absolu multitour de haute précision, avec redondance incorporée :

- La figure 1, issue de l'art antérieur, montre une solution monotour,

- la figure 2, issue de l'art antérieur, montre une solution multitour avec réducteur + capteur monotour,

- la figure 3, issue de l'art antérieur, montre les signaux de sortie d'une solution multitour discontinue,

- la figure 4, issue de l'art antérieur, montre une solution magnétique multitour à système de réduction discontinue,

- la figure 5, issue de l'art antérieur, présente une solution potentiométrique multitour à système de réduction discontinue,

- la figure 6, issue de l'art antérieur, montre les signaux de sortie d'une solution multitour discrète,

- la figure 7, issue de l'art antérieur, montre une solution multitour à déphasage de signaux par l'intermédiaire de deux roues dentées à denture légèrement différentes,

- la figure 8, issue de l'art antérieur, présente deux Signaux de sortie à déphasage croissant,

- la figure 9, issue de l'art antérieur, montre une solution multitour à bout d'axe,

- la figure 10 est un graphique montrant les signaux de sortie des 2 capteurs,

- la figure 11 présente une vue de face de l'invention avec roue et vis sans fin,

- la figure 12 présente une vue éclatée en perspective par-dessus du capteur complet à roue et vis sans fin,

- la figure 13 montre les éléments de la figure 11 vus de dessous,

- la figure 14 est une vue éclatée en perspective, couvercle enlevé de l'invention à roue et vis sans fin,

- la figure 15 est une vue d'ensemble, de face, couvercle enlevé de l'invention à roue et vis sans fin,

- la figure 16 est une vue sans couvercle par transparence de l'invention avec réduction par train d'engrenage,

- la figure 17 est une vue éclatée en perspective du capteur avec réduction par train d'engrenage, boîtier enlevé,

- la figure 18 est une vue en perspective de l'invention avec réduction par train d'engrenage,

- la figure 19 est une vue de côté de l'invention avec réduction par train d'engrenage, boîtier enlevé,

- la figure 20 est une vue de l'invention avec réducteur magnétique composé de l'aimant principal et de l'aimant de couplage en position,

- la figure 21 est une vue de face de l'association d'un capteur de couple et du capteur de position principal 360°,

- la figure 22 est une vue en coupe de l'association d'un capteur de couple et du capteur de position principal 360°,

- la figure 23 est une vue des ASICS du capteur de couple et position intégré sur le même PCB,

- la figure 24 est une vue en perspective de l'association d'un capteur de couple, du capteur de position principal 360° et du capteur secondaire avec transformation de mouvement à vis,

- la figure 25 est une vue de face de l'association d'un capteur de couple, du capteur de position principal 360° et du capteur secondaire avec transformation de mouvement à vis,

- la figure 26 est une vue de côté de l'association d'un capteur de couple, du capteur de position principal 360° et du capteur secondaire avec transformation de mouvement à vis.

**Descriptif détaillé des figures**

Les figures 1 à 9 sont des figures présentant l'art antérieur décrit dans la première partie de ce brevet.

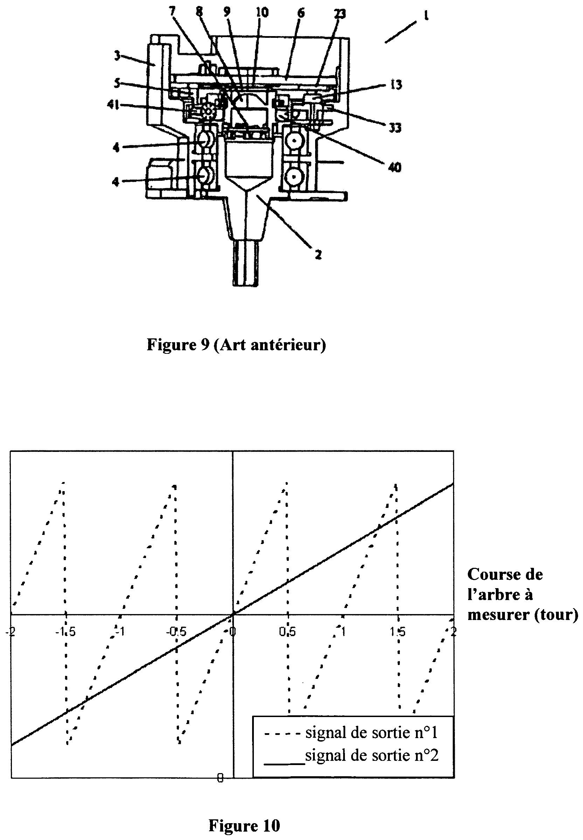

La figure 10 montre les signaux de sortie de la présente invention. Le premier signal est un signal périodique sur 360° (1 tour) qui a une résolution très fine et le deuxième signal est un signal absolu sur 4 tours qui a une résolution 4 fois moindre que le signal périodique.

Les figures 11 à 15 montrent l'utilisation d'un réducteur à roue et vis sans fin.

La vis (1) de diamètre important est creuse pour se monter autour de l'axe à mesurer, par exemple une colonne de direction d'un véhicule automobile. Ladite vis est fixée sur l'axe à mesurer. Un premier aimant (3) d'aimantation diamétrale est lié à cette vis et fait partie du premier capteur, à signal précis sur un tour. Cet aimant peut être monté sur une culasse magnétique (8) ou non. Ladite vis est en liaison pivot avec le boîtier (9) du capteur. Ledit boîtier étant fixe dans l'application. Cette vis entraîne en rotation un pignon (4) auquel est lié un second aimant (7) qui fait partie du second capteur magnétique à signal moins précis mais qui s'étend sur la totalité de la course (figure 10, signal n°2). Ledit pignon est en liaison pivot avec le boîtier. (9) La course angulaire des volants de véhicule automobile s'étend dans la plupart des cas entre 2 et 5 tours, sans que ces valeurs soient exhaustives. Le rapport de réduction est choisi pour que l'aimant indicateur de tour (7) fasse un peu moins d'un tour sur la totalité de la course. C'est en effet cette course angulaire qui permet de tirer le meilleur parti des possibilités du second capteur, en terme de résolution. Dans l'exemple illustré, la vis (1) est à 3 filets et le pignon (4) à 13 dents. Le rapport de réduction est donc de 4.33 ce qui fait qu'il est tout indiqué pour aller sur un volant de 4 tours de course. La transformation de mouvement tolère un léger jeu, mais celui-ci doit être limité au strict nécessaire pour ne pas diminuer de manière excessive la précision du second capteur par ajout d'un hystérésis parasite lié au jeu dans la réduction.

La sonde 2 mesure les composantes radiales et tangentielles de l'aimant 3 qui est aimanté diamétralement.

La sonde (6) mesure les composantes axiales et tangentielles de l'aimant (7) qui est aimanté diamétralement.

Ce type de choix de construction permet d'avoir un capteur compact avec un faible nombre de pièces, et ces pièces peuvent être réalisées facilement en grande série en injection plastique pour un coût réduit. Cette structure permet en outre de placer les 2 sondes (2 et 6) sur le même PCB (5), ce qui est un avantage non négligeable du point de vue du coût de fabrication.

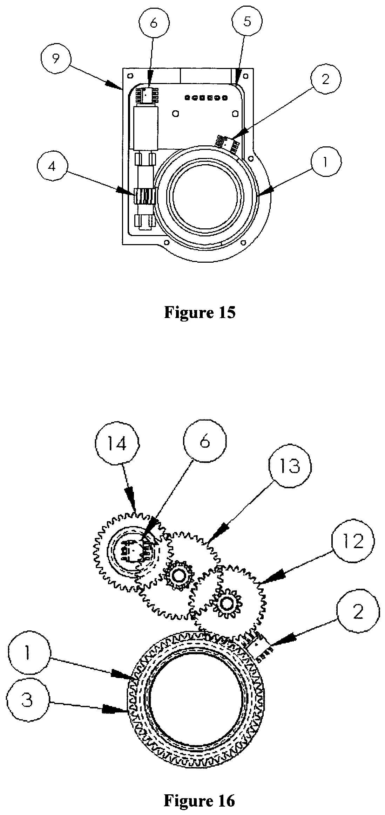

Les figures 16 à 19 montrent l'utilisation d'un réducteur à train d'engrenages

Une première roue (1), creuse, est liée à l'arbre dont on doit mesurer la position angulaire. Ledit arbre traverse la roue (1) de part en part.

Un premier aimant (3) aimanté diamétralement est lié à cette roue et fait partie du 1er capteur, à signal fin sur un tour (figure 10, signal n°1). Un second mobile (12) composé d'un pignon et d'une roue engrène sur la première roue (1). Un troisième mobile (13) similaire au second engrène sur celui-ci, et entraîne un quatrième mobile (14) en rotation. Tous ces mobiles sont en liaison pivot dans le boîtier (9). Cet ensemble de mobiles, appelé train d'engrenage, réalise une réduction de la vitesse angulaire de la roue 1.

Le quatrième mobile porte un aimant (7) aimanté diamétralement et un anneau (16) en fer doux qui a fonction de blindage magnétique. Ce second aimant (7) fait partie du second capteur (figure 10, signal n°2) à signal grossier, mais qui s'étend sur la totalité de la course.

Ce second capteur peut être à axe traversant ou non, la liaison pivot entre le quatrième mobile (14) et le boîtier (9) pouvant être déportée. Les composantes du champ de l'aimant mesurées par la sonde sont donc 2 composantes radiales, orthogonales l'une à l'autre, sur un point de l'axe de rotation de l'aimant dans le cas d'un axe non traversant, ou les composantes radiale et tangentielle en un point à l'extérieur de l'aimant dans le cas d'un axe traversant.

De la même manière que dans l'exemple précédent le rapport de réduction est choisi pour que le quatrième mobile (14) et donc l'aimant (7) fassent un peu moins d'un tour sur la course totale de l'arbre d'entrée.

Le nombre de mobiles peut être modifié pour s'adapter aux contraintes d'encombrement ou à la course requise.

Le couple à transmettre étant extrêmement faible, les dents d'engrenage peuvent être faites avec un angle de pression faible, par exemple 12°, de manière à limiter au maximum les jeux qui nuisent à la précision du second capteur. En effet, bien que la précision requise ne soit pas très élevée pour la fonction de décodage du tour, elle l'est bien plus pour la fonction de redondance.

Tous les mobiles peuvent être réalisés de manière économique en injection plastique ainsi que le boîtier (9) qui les porte. Les sondes (2 et 6) sont soudées sur un unique PCB (5) ce qui rend le procédé économique.

Dans l'exemple illustré, les dentures choisies sont :

- roue d'entrée 1 : 60 dents,

- roue 12 : 12 et 34 dents,

- roue 13 : 12 et 39 dents,

- roue de sortie 14 : 35 dents.

Ce qui fait un rapport de réduction de 5,37. L'exemple illustré ici est donc adapté à une course de volant de 5 tours.

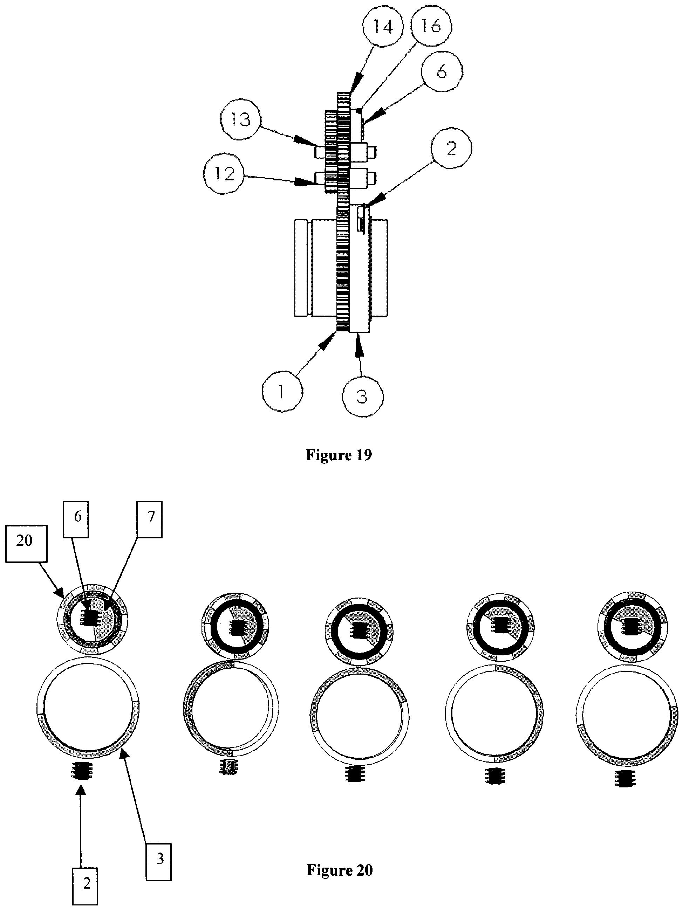

La figure 20 illustre l'utilisation d'un couplage magnétique direct.

Dans l'exemple illustré, l'aimant bague (3) aimanté diamétralement est lié à l'arbre dont on doit mesurer la rotation. Un aimant bague multipolaire (20) disposé dans le même plan et en liaison pivot avec le boîtier interagit avec celui-ci. En effet les pôles nord et sud alternent face aux pôles sud et nord de l'aimant principal (3), réalisant ainsi une réduction de vitesse angulaire entre les 2 aimants. L'homme de métier connaît bien ces systèmes de réduction magnétique sans contact qui permettent de faire des réductions à travers des parois fines amagnétiques ou sans contact mécanique direct entre les roues.

Dans l'exemple illustré, l'aimant de l'arbre primaire (3) a une paire de pôles, l'aimant de l'arbre secondaire (20) à 6 paires de pôles, ce qui fournit un rapport de réduction de 6 entre les 2 arbres et qui rend le système adapté pour mesurer des courses de volant de 6 tours environ.

Un aimant bipolaire (7) placé au coeur de la roue secondaire permet de capter la position angulaire de la roue secondaire de la même manière que dans l'exemple précédent. L'aimant principal (3) est lié de manière rigide à la colonne de direction, ce qui permet de mesurer de manière précise la position.

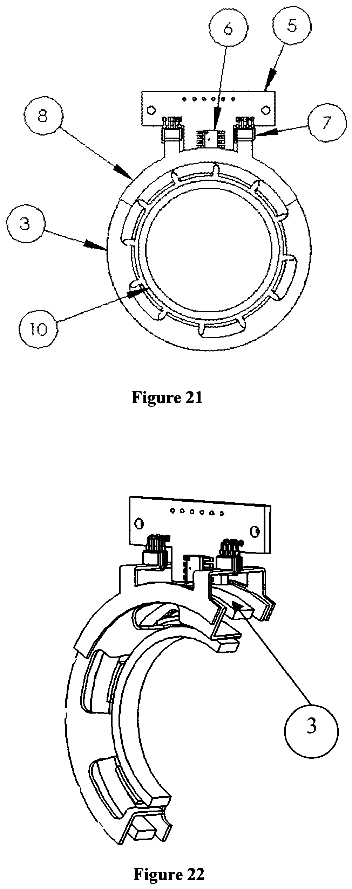

Les figures 21 et 22 sont une vue de face et une vue en coupe de l'ensemble très compact du capteur de couple et capteur de position absolu 360°. Cet ensemble regroupe :

- un capteur de couple composé d'un aimant multipolaire (10) de deux stators, de deux collecteurs (8), de deux éléments magnétosensibles (7) montés sur un PCB (5),

- un capteur de position composé d'un aimant aimanté diamétralement (3) qui se trouve judicieusement entre 2 stators pour optimiser l'encombrement de l'ensemble et une sonde (6) qui mesure les composantes axiales et tangentielles de l'aimant (3) disposé sur le PCB (5). Ainsi l'aimant (3) peut être surmoulé en même temps que les stators et la mesure du couple et de la position à l'aide d'élément magnéto sensible se fait dans un même plan.

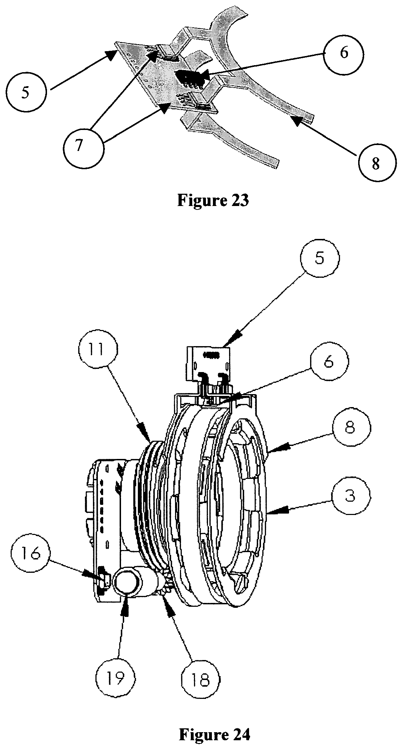

La figure 23 est une vue des 2 ASIC hall du capteur de couple (7), de l'ASIC Hall pour le capteur de position 360°, de l'unique PCB sur lequel les ASIC sont intégrés et la structure collectrice du capteur de couple.

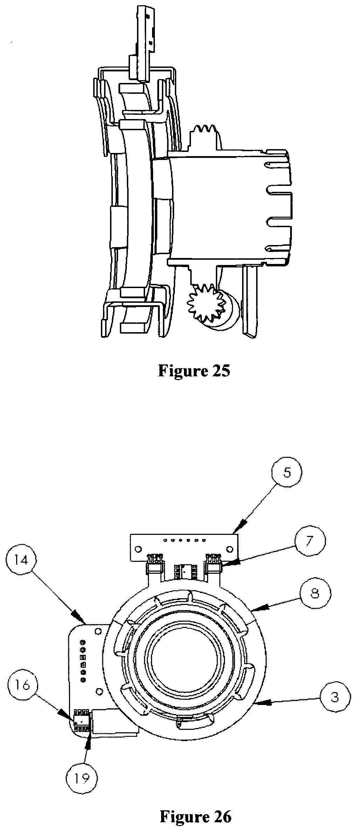

Les figures 24 et 25 et 26 sont respectivement une vue en perspective, une vue en coupe et une vue de face d'un ensemble capteur de couple et capteur de position absolu multitour. Cet ensemble regroupe :

- un capteur de couple composé d'un aimant multipolaire (10) de deux stators, de deux collecteurs (8), de deux éléments magnéto-sensibles (7) montés sur un PCB (5),

- un système de détection qui génère un signal selon une fonction « périodique » de période Thêta/n donnant la position angulaire périodique composé d'un aimant aimanté diamétralement (3) qui se trouve judicieusement entre les 2 stators optimiser l'encombrement de l'ensemble et une sonde (6) qui mesure les composantes axiales et tangentielles de l'aimant (3) disposé sur le PCB (5),

- un système de détection qui génère un signal absolu sur une course de thêta composé d'une réduction à roue (18) et vis sans fin (11) (voir description des figures 11 à 15) d'un aimant (19) aimanté diamétralement et d'une une sonde (16) qui mesure les composantes axiales et tangentielles de l'aimant (19).

Tel que l'on peut l'observer notamment sur les figures 11 à 19, les deux systèmes de détection, ou sondes (2) et (6), sont avantageusement positionnés à proximité l'un de l'autre afin de réaliser un capteur compact pouvant être monté dans un seul et même boîtier.

## Revendications

1. Capteur magnétique de position absolue pour mesurer la position angulaire sur une course Thêta d'un arbre qui traverse ledit capteur et qui comporte au moins deux systèmes de détection de position dudit arbre, **caractérisé en ce que** :

   - au moins un premier système de détection comporte un système mécanique de transformation de mouvement continue dont l'arbre d'entrée est lié audit arbre, ledit au moins un premier système de détection générant un signal selon une fonction périodique de période Thêta/n donnant laposition angulaire périodique dudit arbre ;
   - au moins un deuxième système de détection génère un signal absolu sur une course de thêta dudit arbre
   - Thêta et n vérifient les relations

     • Thêta/n =360
     • n > 1

   - un premier aimant d'aimantation diamétrale est lié à une vis de diamètre important, creuse, montée autour de l'arbre et fait partie du premier système, ladite vis entraîne en rotation un pignon auquel est lié un second aimant qui fait partie du deuxième système de détection.

2. Capteur de position selon la revendication 1, **carac-**

**térisé en ce que** le système de détection qui génère un signal selon une fonction « périodique » de période Thêta/n donnant la position angulaire périodique dudit arbre comporte au moins 2 éléments magnéto sensibles localisés sensiblement au même point qui mesurent la composante tangentielle ou radiale ou axiale du champ magnétique créé par un aimant et la composante radiale ou axiale ou tangentielle du champ magnétique pour fournir 2 signaux sinusoïdaux sensiblement déphasés de 90°.

3. Capteur de position magnétique selon la revendication 2, **caractérisé en ce que** le système de détection qui génère un signal absolu sur une course de thêta dudit arbre comporte au moins un aimant sur l'arbre de sortie du système mécanique de transformation de mouvement continue et au moins un élément magnétosensible.

4. Capteur de position selon la revendication 3, **caractérisé en ce que** système de détection qui génère un signal absolu sur une course de thêta dudit arbre comporte au moins 2 éléments magnétosensibles localisés sensiblement au même point qui mesurent la composante tangentielle ou radiale ou tangentielle du champ magnétique et la composante radiale ou axiale ou tangentielle du champ magnétique pour fournir 2 signaux sinusoïdaux sensiblement déphasés de 90°.

5. Capteur de position magnétique selon la revendication 4, **caractérisé en ce que** les éléments magnétosensibles du système de détection qui génère un signal selon une fonction périodique de période Thêta/n donnant la position angulaire périodique dudit arbre et celui ou ceux du système de détection qui génère un signal absolu sur une course de thêta dudit arbre sont coplanaires.

6. Capteur de position magnétique selon la revendication 5, **caractérisé en ce que** les éléments magnétosensibles sont rattachés au même plan de connexion.

7. Capteur de position magnétique selon la revendication 5, **caractérisé en ce que** le système mécanique de transformation de mouvement continue est un réducteur à roues ou à vis sans fin.

8. Capteur de position magnétique selon la revendication 5, **caractérisé en ce que** le système mécanique de transformation de mouvement continue est un réducteur sans contact composé d'au moins 2 aimants multipolaires dont au moins 1 lié audit arbre.

9. Capteur de position magnétique selon la revendication 8, **caractérisé en ce que** l'aimant multipolaire du réducteur lié audit arbre est également l'aimant du système de détection qui génère un signal selon une fonction « périodique » de période Thêta/n donnant la position angulaire périodique dudit arbre.

10. Capteur de position magnétique selon la revendication 8, **caractérisé en ce que** l'aimant multipolaire du réducteur lié au système de transformation de mouvement continu est également l'aimant du système de détection qui génère un signal absolu sur une course de thêta dudit arbre.

11. Capteur de position magnétique selon la revendication 1, **caractérisé en ce qu'**un circuit de traitement du signal réalise un calcul de la position absolue très précis dudit arbre sur la course complète Thêta en utilisant les signaux électriques des deux systèmes de détection.

12. Capteur de position magnétique selon la revendication 1, **caractérisé en ce que** les deux systèmes de détection sont positionnés à proximité l'un de l'autre de sorte à pouvoir être intégré dans un seul boîtier.

13. Ensemble de capteur de position, notamment destiné à la détection de la torsion d'une colonne de direction, **caractérisé en ce qu'**il comporte :

au moins un système de détection de la position angulaire relative +/-PHI, avec PHI > 20, d'un arbre d'entrée et de sortie coaxiaux reliés par une barre de torsion pour en déduire le couple de torsion exercée sur la barre, constitué d'une première structure magnétique rotorique comprenant une pluralité d'aimants orientés radialement, d'une seconde structure statorique comprenant deux couronnes prolongées de dents au voisinage de laquelle est placé au moins un élément magnéto sensible,

- au moins un capteur magnétique de position absolue selon l'une quelconque des revendications 1 à 12 pour mesurer la position angulaire sur une course Thêta de l'arbre d'entrée ou de sortie ; et
- au moins un système de traitement du signal, **caractérisé en ce que**
- au moins un système de détection génère un signal selon une fonction périodique de période Thêta/n donnant la position angulaire périodique dudit arbre ;
- au moins un système de détection génère un signal absolu sur une course de thêta dudit arbre
- Thêta, PHI et n vérifie

$$\text{Thêta/n} = 360$$

$$\text{Thêta /Phi} > 20$$

$$n \geq 1$$

que ledit arbre du système de détection soit également l'arbre d'entrée ou de sortie du capteur de couple.

14. Ensemble de capteur de position selon la revendication 13, **caractérisé en ce que** le capteur de couple comporte une troisième structure collectrice fixe constituée de deux pièces de fermeture de flux qui définissent au moins un entrefer dans lequel est placé au moins un élément magnéto sensible.

15. Ensemble de capteur de position selon la revendication 14, **caractérisé en ce que** les pièces de fermeture de flux du capteur de couple et les couronnes de stators définissent entre elles une surface de collection

constante et indépendante de la position radiale relative

des deux structures statorique et collectrice.

16. Ensemble de capteur de position selon la revendication 13, **caractérisé en ce que** le capteur de position absolu est réalisé selon l'une des revendications 2
à 11.

17. Ensemble de capteur de position magnétique selon la revendication 13, **caractérisé en ce que** les éléments magnétosensibles du système de détection qui génère un signal selon une fonction « périodique » de période Thêta/n
donnant la position angulaire périodique dudit arbre ou/et celui ou ceux du système de détection qui génère un signal absolu sur une course de thêta dudit arbre soient coplanaires avec le ou les éléments magnétosensibles du capteur destiné à la mesure de torsion.

18. Ensemble de capteur de position magnétique selon la revendication 13, **caractérisé en ce qu'**au moins un blindage est intégré entre le capteur destiné à la mesure de torsion et les systèmes de détection de position dudit arbre.

19. Ensemble de capteur de position magnétique selon la revendication 13, **caractérisé en ce que** les sous-ensembles magnétiques du capteur de couple et de position sont surmoulés.

**Patentansprüche**

1. Magnetischer Absolutwinkelstellungssensor, um die Winkelstellung auf einem Theta-Hub einer Welle zu messen, die durch besagten Sensor führt und mindestens zwei Systeme zur Stellungsdetektion besagter Welle aufweist, **dadurch gekennzeichnet, dass**:

   - mindestens ein erstes Detektionssystem ein mechanisches kontinuierliches Bewegungsumwandlungssystem umfasst, dessen Antriebswelle mit besagter Welle verbunden ist, wobei mindestens ein erstes Detektionssystem ein Signal gemäß einer periodischen Funktion einer Periode Theta/n erzeugt, welches die periodische Winkelstellung besagter Welle angibt,
   - mindestens ein zweites Detektionssystem ein absolutes Signal auf einem Theta-Hub besagter Welle erzeugt
   - Theta und n die Relationen prüfen

     • Theta/n = 360
     • n > 1

   - ein erster Magnet mit diametraler Magnetisierung mit einer um die Welle montierten, zum ersten System gehörenden Hohlschnecke mit großem Durchmesser verbunden ist, wobei besagte Schnecke ein Zahnrand zu einer Drehbewegung antreibt, mit dem ein zweiter, zum zweiten Detektionssystem gehörender Magnet verbunden ist.

2. Stellungssensor nach Anspruch 1, **dadurch gekennzeichnet, dass** das Detektionssystem, welches ein Signal entsprechend einer "periodischen" Funktion der die periodische Winkelstellung der Welle angebenden Periode Theta/n erzeugt, mindestens zwei magnetempfindliche Elemente umfasst, die im Wesentlichen an ein und derselben Stelle angeordnet sind und die Tangential-, Radial- oder Axialkomponente des durch einen Magneten erzeugten Magnetfelds und die Radial-, Axial- oder Tangentialkomponente des Magnetfelds messen, um 2 im Wesentlichen um 90° phasenverschobene Sinussignale zu liefern.

3. Magnetischer Stellungssensor nach Anspruch 2, **dadurch gekennzeichnet, dass** das Detektionssystem, welches ein absolutes Signal auf einem Theta-Hub besagter Welle erzeugt, mindestens einen Magneten auf der Abtriebswelle des mechanischen Systems der kontinuierlichen Bewegungsumwandlung und mindestens ein magnetempfindliches Element enthält.

4. Stellungssensor nach Anspruch 3, **dadurch ge-**

**kennzeichnet, dass** das Detektionssystem, das ein absolutes Signal auf einem Theta-Hub besagter Welle erzeugt, mindestens 2 magnetempfindliche Elemente umfasst, die sich im Wesentlichen an ein und derselben Stelle befinden und die Tangential- oder Radial- oder Axialkomponente des Magnetfeldes und die Radial- oder Axial- oder Tangentialkomponente des Magnetfelds messen, um 2 Sinussignale zu liefern, die im Wesentlichen um 90° phasenverschoben sind.

5. Magnetischer Stellungssensor nach Anspruch 4, **dadurch gekennzeichnet, dass** die magnetempfindlichen Elemente des Detektionssystems, welches ein die periodische Winkelstellung besagter Welle angebendes Signal gemäß einer periodischen Funktion der Periode Theta/n erzeugt, und die des Detektionssystems, welches ein absolutes Signal auf einem Theta-Hub besagter Welle erzeugt, koplanar sind.

6. Magnetischer Stellungssensor nach Anspruch 5, **dadurch gekennzeichnet, dass** die magnetempfindlichen Elemente mit der gleichen Anschlussebene verbunden sind.

7. Magnetischer Stellungssensor nach Anspruch 5, **dadurch gekennzeichnet, dass** das mechanische System zur kontinuierlichen Bewegungsumwandlung ein Rad- oder Schneckengetriebe ist.

8. Magnetischer Stellungssensor nach Anspruch 5, **dadurch gekennzeichnet, dass** das mechanische System zur kontinuierlichen Bewegungsumwandlung ein kontaktloses Getriebe bestehend aus mindestens 2 mehrpoligen Magneten ist, von denen mindestens einer mit der Welle verbunden ist.

9. Magnetischer Stellungssensor nach Anspruch 8, **dadurch gekennzeichnet, dass** der mehrpolige Magnet des mit der Welle verbundenen Getriebes auch der Magnet des Detektionssystems ist, welches ein Signal entsprechend einer "periodischen" Funktion der Periode Theta/n zur Angabe der periodischen Winkelstellung der Welle erzeugt.

10. Magnetischer Stellungssensor nach Anspruch 8, **dadurch gekennzeichnet, dass** der mehrpolige Magnet des Getriebes, das mit dem System zur kontinuierlichen Bewegungsumwandlung verbunden ist, auch der Magnet des Detektionssystems ist, welches ein absolutes Signal auf dem Theta-Hub besagter Welle erzeugt.

11. Magnetischer Stellungssensor nach Anspruch 1, **dadurch gekennzeichnet, dass** eine Signalverarbeitungsschaltung die absolute Position der Welle auf dem kompletten Theta-Hub mithilfe der elektrischen Signale der beiden Detektionssysteme sehr genau berechnet.

12. Magnetischer Stellungssensor nach Anspruch 1, **dadurch gekennzeichnet, dass** die beiden nah beieinander liegenden Detektionssysteme so positioniert sind, dass sie in einen einzigen Kasten integriert werden können.

13. Stellungssensoreinheit, die insbesondere für die Detektion der Drehung einer Lenksäule bestimmt ist, **dadurch gekennzeichnet dass** sie folgendes umfasst:

- mindestens ein System zur Detektion der relativen Winkelstellung +/-PHI mit PHI > 20 einer koaxialen Antriebs- und einer koaxialen Abtriebswelle, die über einen Drehstab zwecks Ableitung der Drehungszahl der Stange miteinander verbunden sind, bestehend aus einer magnetischen Rotorstruktur mit einer Vielzahl radial ausgerichteter Magneten, und einer Statorstruktur mit zwei mit Zahnungen verlängerten Wicklungen, in deren Nähe mindestens ein magnetempfindliches Element positioniert ist.
- mindestens einen magnetischen Absolutwinkelstellungssensor nach einem der Ansprüche 1 bis 12, um die Winkelstellung auf einem Theta-Hub der Antriebs- oder Abtriebswelle zu messen; und
- mindestens ein Signalverarbeitungssystem, **dadurch gekennzeichnet, dass**
- mindestens ein Detektionssystem ein Signal nach einer periodischen Funktion einer Periode Theta/n erzeugt, welches die periodische Winkelstellung besagter Welle angibt;
- mindestens ein Detektionssystem ein absolutes Signal auf einem Theta-Hub besagter Welle erzeugt,
- Theta, PHI und n prüft

$$Theta/n = 360$$

$$Theta \ / \ Phi > 20$$

$$n >= 1$$

dass die Welle des Detektionssystems gleich die Antriebs- oder Abtriebswelle des Drehmomentsensors ist.

14. Stellungssensoreinheit nach dem Anspruch 13, **da-**

**durch gekennzeichnet, dass** der Drehmomentsensor eine feststehende Sammelstruktur aufweist, die aus zwei, mindestens einen Spalt abgrenzenden Teilen zum Verschließen einer Strömung besteht, in dem sich mindesten ein magnetempfindliches Element befindet.

15. Stellungssensoreinheit nach Anspruch 14, **dadurch gekennzeichnet, dass** die Verschließteile der Strömung des Drehmomentsensors und die Statorwicklungen eine gleichmäßige Sammelfläche definieren, die unabhängig von der radialen Stellung der Stator- und der Sammelstruktur ist.

16. Stellungssensoreinheit nach Anspruch 13, **dadurch gekennzeichnet, dass** der Sensor für die absolute Winkelstellung nach einem der Ansprüche 2 bis 11 hergestellt wird.

17. Magnetische Stellungssensoreinheit nach Anspruch 13, **dadurch gekennzeichnet, dass** die magnetempfindlichen Elemente des Detektionssystems, welches ein, die periodische Winkelstellung besagter Welle angebendes Signal gemäß einer periodischen Funktion der Periode Theta/n erzeugt, und/oder des Detektionssystems, welches ein absolutes Signal auf einem Theta-Hub besagter Welle erzeugt, koplanar mit dem oder den magnetempfindlichen Elementen des zur Messung der Drehung bestimmten Sensors ist.

18. Magnetische Sensoreinheit gemäß Anspruch 13, **dadurch gekennzeichnet, dass** zumindest eine Abschirmung zwischen dem zum Messen der Drehung bestimmten Sensor und den Systemen der Stellungsdetektion besagter Welle integriert ist.

19. Magnetische Sensoreinheit gemäß Anspruch 13, **dadurch gekennzeichnet, dass** die magnetischen Unterbaugruppen des Dreh- und Stellungssensors aufgeformt sind.

**Claims**

1. An absolute position magnetic sensor for measuring the angular position, on a theta stroke, of a shaft passing through said sensor and which comprises at least two systems for detecting the position of said shaft,
   **characterized in that**:

   - at least a first detection system comprises a continuous motion-converting mechanical system, the input shaft of which is connected to said shaft, with said at least first detection system generating a signal according to a periodic function having a theta/n period giving the periodic angular position of said shaft;
   - at least a second detection system generates an absolute signal on a theta stroke of said shaft;
   - theta and n are related by the following equations:

     . theta/n=360
     . N>1

   - a first diametral magnetization magnet is connected with a hollow screw having a large diameter mounted about the shaft, and belongs to the first system, said screw rotates a pinion which a second magnet belonging to the second detection system is connected with.

2. A position sensor according to claim 1, **characterized in that** the detection system which generates a signal according to a periodic function having a theta/n period giving the periodic angular position of said shaft comprises at least two magneto-sensitive elements located at substantially the same point which measure the tangential or radial or axial component of the magnetic field created by a magnet and the radial or axial or tangential component of the magnetic field to provide two sinusoidal signals phase-shifted by substantially 90°.

3. A magnetic position sensor according to claim 2, **characterized in that** the detection system which generates an absolute signal on a theta stroke of said shaft comprises at least one magnet on the output shaft of the continuous motion-converting mechanical system and at least one magneto-sensitive element.

4. A position sensor according to claim 3, **characterized in that** the detection system which generates an absolute signal on a theta stroke of said shaft comprises at least two magneto-sensitive elements located at substantially the same point which measure the tangential or radial or axial component of the magnetic field and the radial or axial or tangential component of the magnetic field to provide two sinusoidal signals phase-shifted by substantially 90°.

5. A magnetic position sensor according to claim 4, **characterized in that** the magneto-sensitive elements of the detection system which generates a signal according to a periodic function having a theta/n period giving the periodic angular position of said shaft and that or those of the system detection which generates an absolute signal on a theta stroke of said shaft are coplanar.

6. A magnetic position sensor according to claim 5, **characterized in that** the magneto-sensitive elements are related to the same connection plane.

**7.** A magnetic position sensor according to claim 5, **characterized in that** the continuous motion-converting mechanical system is a worm-gear/wheel reducer.

**8.** A magnetic position sensor according to claim 5, **characterized in that** the continuous motion-converting mechanical system is a contactless reducer consisting of at least two multipole magnets, at least one of which is connected to said shaft.

**9.** A magnetic position sensor according to claim 8, **characterized in that** the multipole magnet of the reducer connected to said shaft is also the magnet of the detection system which generates a signal according to a periodic function having a theta/n period giving the periodic angular position of said shaft.

**10.** A magnetic position sensor according to claim 8, **characterized in that** the multipole magnet of the reducer connected to the continuous motion-converting system is also the magnet of the detection system which generates an absolute signal on a theta stroke of said shaft.

**11.** A magnetic position sensor according to claim 1, **characterized in that** a signal processing circuit very precisely computes the absolute position of said shaft on the full theta stroke using the electric signals from both detection systems.

**12.** A magnetic position sensor according to claim 1, **characterized in that** both detection systems are positioned close to one another so as to be adapted to be integrated in one single housing.

**13.** A position sensor assembly, in particular intended for the detection of the torsion of a steering column, **characterized in that** it comprises:

- at least one system for detecting the relative angular position +/-PHI, with PHI>20, of coaxial input and output shafts connected by a torsion bar in order to deduce therefrom the torsion torque exerted on the bar, consisting of a first magnetic rotor structure comprising a plurality of radially oriented magnets, of a second stator structure comprising two rings extended by teeth in the vicinity of which at least one magneto-sensitive element is placed,
- at least one absolute position magnetic sensor according to any one of claims 1 to 12 for measuring the angular position on a theta stroke of the input or output shafts; and
- at least one signal processing system,

**characterized in that**

- at least one detection system generates a signal according to a periodic function having a theta/n period giving the periodic angular position of said shaft;
- at least one detection system generates an absolute signal on a theta stroke of said shaft;
- theta, PHI and n are related by:

$$theta/n=360$$

$$theta/phi>20$$

$$n>=1,$$

whether said shaft of the detection system also is the input shaft or the output shaft of the torque sensor.

**14.** A position sensor assembly according to claim 13, **characterized in that** the torque sensor comprises a third stationary collecting structure consisting of two flow shutting parts which define at least one gap wherein at least one magneto-sensitive element is placed.

**15.** A position sensor assembly according to claim 14, **characterized in that** the flow shutting parts of the torque sensor and the stator rings define between them a constant collecting surface independent of the relative radial position of the two stator and collecting structures.

**16.** A position sensor assembly according to claim 13, **characterized in that** the absolute position sensor is produced according to one of claims 2 to 11.

**17.** A magnetic position sensor assembly according to claim 13, **characterized in that** the magneto-sensitive elements of the detection system which generates a signal according to a periodic function having a theta/n period giving the periodic angular position of said shaft and/or that or those of the detection system which generates an absolute signal on a theta stroke of said shaft are coplanar with the magneto-sensitive element(s) of the sensor intended for measuring torsion.

**18.** A magnetic position sensor assembly according to claim 13, **characterized in that** at least one shield is integrated between the sensor intended for measuring torsion and the systems for detecting the position of said shaft.

**EP 2 171 403 B1**

**19.** A magnetic position sensor assembly according to claim 13, **characterized in that** the magnetic subassemblies of the torque and position sensor are overmolded.

**Figure 1 (Art antérieur)**

**Figure 2 (Art antérieur)**

Figure 3 (Art antérieur)

Figure 4 (Art antérieur)

**Figure 5 (Art antérieur)**

**Figure 6 (Art antérieur)**

**Figure 7 (Art antérieur)**

[FIG. 2]

**Figure 8 (Art antérieur)**

**Figure 9 (Art antérieur)**

**Course de l'arbre à mesurer (tour)**

- - - - signal de sortie n°1
———— signal de sortie n°2

**Figure 10**

Figure 11

Figure 12

**Figure 13**

**Figure 14**

**Figure 15**

**Figure 16**

Figure 17

Figure 18

**Figure 19**

**Figure 20**

Figure 21

Figure 22

**Figure 23**

**Figure 24**

**Figure 25**

**Figure 26**

**EP 2 171 403 B1**

**Documents brevets cités dans la description**

- WO 07014599 A
- EP 1219527 A
- US 6848187 B
- US 6384598 B
- US 5200747 A
- US 2005000288286 A
- JP 2006119082 B
- US 6941241 B
- US 5930905 A
- US 6466889 B
- WO 2005076860 A
- EP 0699151 A
- WO 07057563 A
- EP 1437575 A
- WO 2007057563 A
- FR 2872896
- US 20060236784 A